# DEMANDE DE BREVET EUROPEEN

(11) **EP 0 777 959 A1**
(43) Date de publication de la demande: **11.06.1997**
(21) Numéro de dépôt: 96870156.5
(22) Date de dépôt: 04.12.1996
(51) Int. Cl.: A01D 34/84, A01B 69/00

(54) **Taille-bords pour pelouses**

(30) Priorité: 06.12.1995 BE 9501001
(71) Demandeur: Van den Bossche, Jozef August, 1750 Lennik (BE)
(72) Inventeur: Van den Bossche, Jozef August, 1750 Lennik (BE)
(74) Mandataire: Overath, Philippe

(57) **Abrégé**

Le taille-bords est composé d'un châssis (10) sur lequel est fixé un moteur (14), dont l'axe (16) est pourvu d'un dispositif de coupe (17). Le châssis (10) est soutenu par au moins deux roues (11, 12, 13) et l'ensemble de l'appareil peut être poussé au moyen d'un manche (24) pourvu d'une poignée (26). Des moyens (25, 27, 40) sont prévus pour guider au moins une des roues (11, 13) au moyen de la poignée (26).

## Description

La présente invention concerne un taille-bords ou un appareil à couper les bords de pelouses, et plus particulièrement, une machine pour couper la bordure d'une pelouse suivant un plan de coupe vertical ou suivant un plan de coupe vertical.

Pour couper le bord d'une pelouse, on utilisait jusqu'ici des cisailles à gazon actionnées manuellement ou un taille-bords à fil de nylon actionné par moteur ou faucheuse (variante de la débroussailleuse).

Il s'agit d'un appareil équipé d'un moteur électrique ou thermique sur l'axe duquel est fixée une bobine de fil de nylon. Selon des moyens connus, l'extrémité libre du fil de nylon, qui est tirée de la bobine sur une certaine longueur, tourne à très grande vitesse et coupe ainsi tous les brins d'herbes et les tiges se trouvant dans le plan de coupe.

Le désavantage de ces appareils de l'état de la technique réside dans le fait que leur guidage, tant dans le plan horizontal que vertical, ne peut s'effectuer de manière optimale, et que le bord de la pelouse n'est de ce fait pas coupé régulièrement.

En effet, le plan de coupe, qui doit en principe être posé perpendiculairement sur la surface de la pelouse, n'est pas constant et d'autre part, lorsque la pelouse présente de longs bords rectilignes, ces derniers ne sont jamais coupés rigoureusement droit.

Le but de cette invention est de faciliter le guidage du taille-bords pour pelouses et, de la sorte, d'optimiser la coupe, tant dans le plan horizontal que dans le plan vertical.

Un autre but de l'invention est d'obtenir un guidage fiable tant pour des bordures de pelouse rectilignes que pour des bordures courbes ou circulaires.

Un autre but de la présente invention est de raccourcir considérablement le temps de travail nécessaire pour tailler les bordures de pelouse, notamment en faisant intervenir le dispositif de guidage.

Un autre but de la présente invention est de proposer une machine dont le plan de coupe du fil de nylon peut être orienté soit à l'horizontale soit à la verticale.

Pour la réalisation de ces objectifs, le taille-bords pour pelouses selon l'invention est pourvu des moyens décrits dans les revendications ci-dessous.

D'autres caractéristiques particulières seront expliquées par la description ci-dessous d'une forme de réalisation de l'invention qui fera référence aux schémas en annexe, dans lesquels
la figure 1 est une élévation latérale du taille-bords pour pelouses selon l'invention dont la coupe est orientée dans un sens vertical;
la figure 2 est une vue de dessus de l'appareil selon la figure 1;
la figure 3 est une élévation latérale du taille-bords pour pelouses selon l'invention avec un sens de coupe selon un plan horizontal;
la figure 4 est une vue du dessous du taille-bords pour pelouses selon l'invention ;
les figures 5, 6 et 7 sont des vues de dessus du taille-bords selon la figure 2 illustrant chacune une forme différente de bords de pelouse.

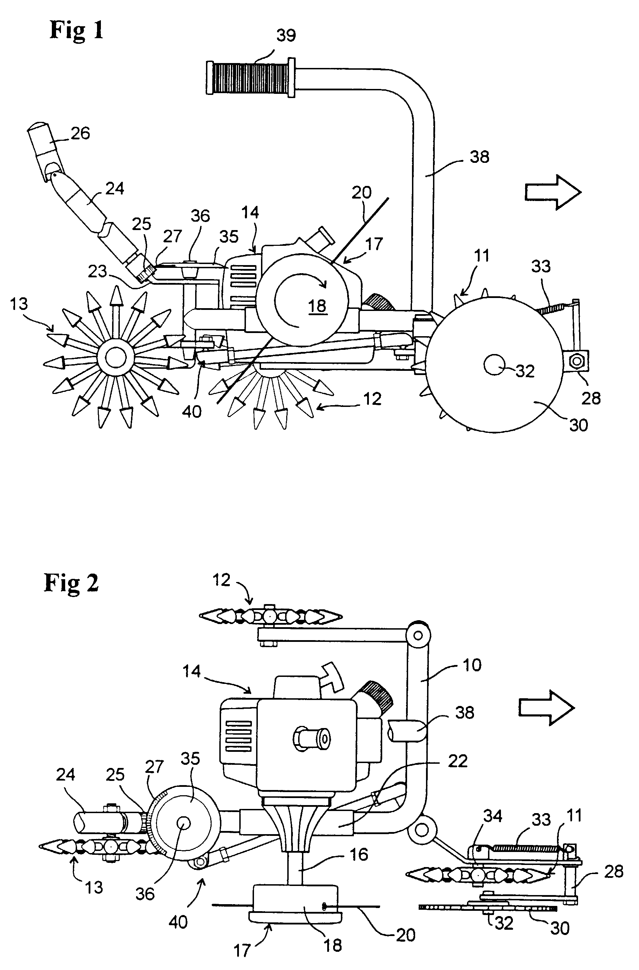

Selon les figures 1 et 2, le taille-bords pour pelouses comprend selon l'invention, un châssis 10 qui est porté ou soutenu par trois roues 11, 12 et 13 qui sont disposées pour ainsi dire en triangle. Les roues 11 à 13 sont de préférence du type décrit et dessiné dans les schémas dans la demande de brevet belge N°9500655 au nom du demandeur.

Une source de puissance indépendante est fixée sur le châssis 10. Cette source de puissance est de préférence un moteur à essence sur l'axe 16 auquel un dispositif de coupe 17 est fixé. Selon la forme de réalisation, ce dispositif de coupe 17 se compose d'un trimmer ou tondeuse à fil de nylon, comme ceux disponibles généralement dans le commerce pour les taille-bords électriques, et qui comprend une bobine 18 avec fil de nylon 20 qui sort de la bobine 18 par un ou de deux orifices diamétralement opposés.

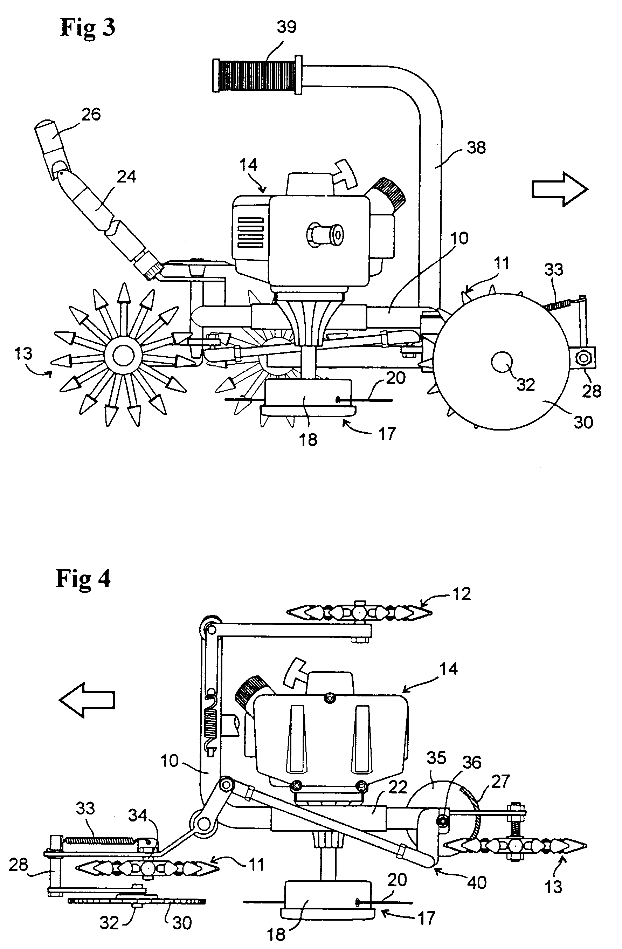

Comme le montrent les figures 1 et 3, le moteur 14 est monté sur le châssis 10 de sorte qu'il puisse pivoter autour d'un axe horizontal au moyen d'un tube 22 qui peut pivoter d'un angle maximal de 90° par rapport au châssis 10.

De cette manière, le moteur 14 avec l'axe 16 et le dispositif de coupe 17 peut soit être mis en position horizontale comme montré aux figures 1 et 2, pour couper l'herbe selon un plan vertical, soit être mis en position verticale comme illustré à la figure 3, pour couper l'herbe dans un plan horizontal.

Pour pousser l'appareil, il est prévu un manche 24 avec une poignée 26, le manche étant relié à un pivot 23 du châssis 10.

Le manche 24 peut tourner librement autour de ce pivot 23, et est pourvu sur sa partie inférieure d'une roue dentée 25 qui s'engrène dans le segment denté d'un disque 35.

La partie inférieure de l'axe 36 de ce disque 35 est fixée par le bas à un jeu de deux leviers articulés 40, comme illustré plus clairement sur la vue du dessous selon la figure 4.

Ce jeu de leviers articulés 40 permet de faire tourner les roues guidées 11 et 13 dans les directions opposées de telle sorte que le pivotement de l'une des roues dans le sens horlogique fasse tourner l'autre dans le sens antihorlogique.

Dans le sens de la marche, indiqué par une flèche sur les figures 1 et 2, les roues 11 et 13 sont pour ainsi dire alignées, la roue 11 se trouvant à l'avant et la roue 13, à l'arrière du châssis, avec le moteur se trouvant à peu près
au milieu des deux, tandis que la troisième roue 12 se trouve sur le côté gauche, plus ou moins dans l'axe longitudinal du moteur 14.

Comme partie intégrante de la suspension de la roue avant 11, il est prévu un étrier de suspension 28 est prévu pour un disque de guidage qui est disposé autour d'un axe 32 de l'étrier 28, autour duquel ledit disque tourne. L'étrier 28 est disposé de manière à pouvoir pivoter verticalement autour de l'axe 34 de la roue avant 11, le disque de guidage (30) étant constamment maintenu au sol au moyen d'un ressort 33.

De la sorte, le disque de guidage 30 peut épouser sans problème ni résistance, les irrégularités de la bordure de la pelouse.

Pour lever et déplacer de l'appareil, une poignée centrale 39 est prévue, qui est reliée au châssis 10 par un bras 38 en forme de L.

Les roues en tandem 11 et 13 doivent donc être de préférence capables de tourner l'une par rapport à l'autre, en l'espèce, de manière à produire un mouvement rotatif dans le sens horlogique pour la roue arrière 13 et dans le sens antihorlogique pour la roue avant.

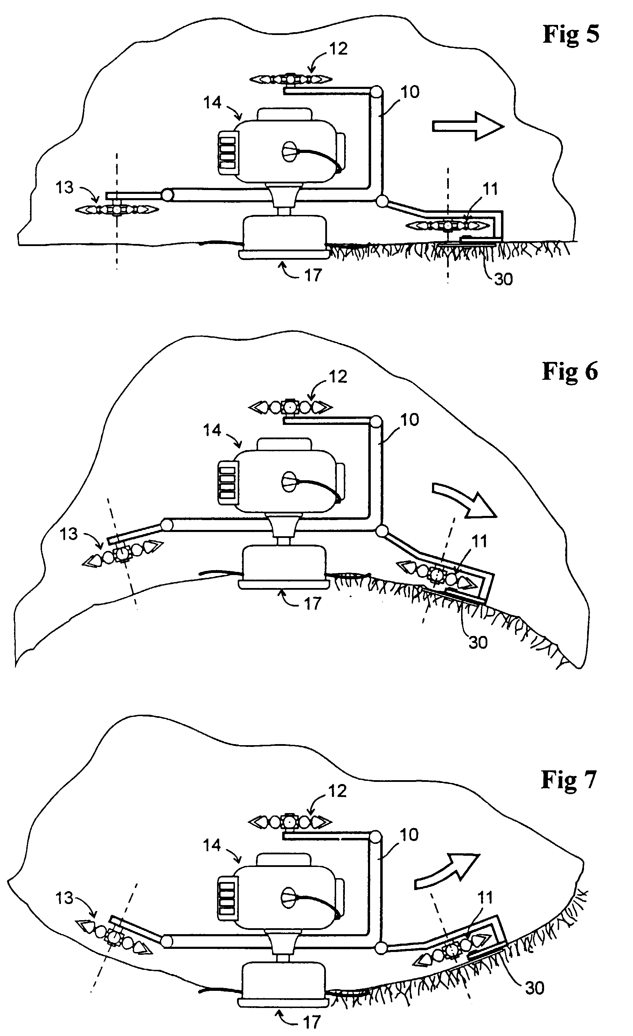

De cette manière, il est possible de suivre avec le taille-bords selon l'invention les bords concaves ou convexes d'un gazon comme illustré aux figures 6 et 7.

D'autres formes de réalisation de la présente invention sont possibles, sans pour autant sortir du cadre de la protection.

Par exemple, le châssis 10 peut n'être supporté que par deux roues qui sont disposées parallèlement à distance l'une de l'autre et peuvent toutes deux tourner en même temps par rapport au manche guidable 24. Dans ce cas, le moteur 14 est disposé centralement entre les deux roues tandis que l'axe du moteur 16 peut tourner au travers de l'axe de l'une des roues et comporte à son extrémité le dispositif de coupe 17, qui saille donc du côté gauche et sur la face externe d'une des roues.

Afin d'augmenter la capacité portante de l'appareil, il est également possible, par exemple, de mettre en oeuvre des roues qui sont pourvues de deux rangées de picots.

Un grand avantage du taille-bords pour pelouses, selon l'invention, est la grande capacité de braquage de l'appareil, ce qui permet à l'utilisateur de pouvoir rester sur la pelouse, quelle que soit la forme de la bordure de celle-ci.

## Revendications

1. Taille-bords pour pelouses se composant d'un châssis (10) sur lequel est fixé un moteur (14), dont l'axe (16) est pourvu d'un dispositif de coupe (17) caractérisé en ce que le châssis (10) est soutenu par au moins deux roues (11, 12, 13), l'ensemble pouvant être poussé au moyen d'un manche (24) muni d'une poignée (26), des moyens (25, 27, 40) étant prévus pour diriger au moins une des roues (11, 13) au moyen de la poignée (26).

2. Taille-bords pour pelouses selon la revendication 1, caractérisé en ce que le manche (24) est relié au châssis (10) au moyen d'un pivot (23) autour duquel le manche (24) peut tourner librement et axialement.

3. Taille-bords pour pelouses selon les revendications 1 et 2, caractérisé en ce que le manche (24) comporte dans sa partie inférieure une roue dentée (25) qui coopère avec un segment denté (27) ou analogue qui est à son tour relié à un mécanisme de leviers articulés (40) qui commande l'orientation des roues (11, 13).

4. Taille-bords pour pelouses selon la revendication 1, caractérisé en ce que l'axe (16) du moteur (14) et du dispositif de coupe (17) est monté, en substance, horizontalement sur le châssis (10).

5. Taille-bords pour pelouses selon la revendication 1, caractérisé en ce que l'axe (16) du moteur (14) et du dispositif de coupe (17) est monté, en substance, verticalement sur le châssis (10).

6. Taille-bords pour pelouses selon la revendication 1, caractérisé en ce que le moteur est disposé centralement entre au moins une roue montée à l'avant (11) et au moins une roue montée à l'arrière (13).

7. Taille-bords pour pelouses selon la revendication 1, caractérisé en ce que le châssis (10) est soutenu par trois roues qui sont disposées en triangle, l'une des roues avant (11) faisant partie d'un élément de guidage (30).

8. Taille-bords pour pelouses selon la revendication 1, caractérisé en ce que le châssis (10) est soutenu par trois roues disposées en triangle, deux roues (11, 13) étant disposées l'une derrière l'autre dans le sens de la marche et un disque de guidage (30) étant accouplé à la roue avant (11).

9. Taille-bords pour pelouses selon la revendication 1, caractérisé en ce que au moins une roue (13) est disposée de manière à ce qu'elle puisse pivoter d'un angle déterminé par rapport au sens de la marche.

10. Taille-bords pour pelouses selon la revendication 8, caractérisé en ce que les deux roues disposées l'une derrière l'autre (11, 13) puissent pivoter en même temps d'un angle déterminé.

11. Taille-bords pour pelouses selon la revendication 10, caractérisé en ce que l'une des deux roues (13) pivote vers la gauche tandis que l'autre (11) tourne vers la droite.

12. Taille-bords pour pelouses selon les revendications 10 ou 11, caractérisé en ce que la troisième roue (12) est disposée de sorte qu'elle puisse pivoter librement par rapport au sens de la marche, des moyens élastiques (33) la ramenant toujours dans la direction normale de la marche.

13. Taille-bords pour pelouses selon la revendication 5, caractérisé en ce que les roues disposées l'une derrière l'autre (11, 13) sont légèrement décalées transversalement l'une par rapport à l'autre (oblique) quand on se réfère au plan de marche.

14. Taille-bords pour pelouses selon la revendication 1, caractérisé en ce que le disque de guidage (30) est disposé de manière à être constamment appliqué contre le sol par des moyens élastiques (33).

15. Taille-bords pour pelouses selon la revendication 1, caractérisé en ce que le châssis (10), auquel tous les éléments (11, 12, 13, 14, 18, etc.) sont fixés, peut être soulevé et déplacé au moyen d'une poignée centrale (39).
